# EUROPEAN PATENT APPLICATION

(11) **EP 4 848 118 A1**
(43) Date of publication of application: **02.12.2026**
(21) Application number: 25315189.8
(22) Date of filing: 28.05.2025
(51) Int. Cl.: G06F 21/32, G06Q 20/40, H04L 9/32, H04L 9/40

(54) **DIGITAL ONBOARDING WITH BIOMETRICS ENROLLMENT**

(71) Applicant: TOPPAN Security SAS, 92150 Suresnes (FR)
(72) Inventor: JOGAND-COULOMB, Fabrice, 75008 Paris (FR)
(74) Representative: Cassin, Rémy

(57) **Abstract**

The present invention relates to a method for verifying a user identity for the purpose of a secure transaction, comprising the following steps of capturing (S1), via a user device (UD), biometric identifier from the user, transmitting (S2) the biometric identifier to an Identity Authority Server (IA) communicatively coupled to the user device (UD). The method comprises the step of comparing (S3), via the Server (IA), the biometric identifier to predefined identity reference data stored in a secure database of the Server confirmed by a Government Authority (GA). The method comprises the step of generating (S4), via the Server (IA), a "successful match" or "mismatch" authentication result response and in case of "successful match", registering and storing (S5), via the user device (UD), the said biometric identifier as biometric reference approved by the Server (IA).

## Description

### FIELD OF THE INVENTION.

The invention generally relates to the technical field of information security and identity authentication, for example within a transaction with a relying party which requires identity confirmation. More specifically, the invention relates to a system and a method for verifying a user's identity, a computer-readable medium and a method for performing a secure transaction with verified user's identity.

### PRIOR ART.

Authentication is a process by which a user demonstrates his or her identity by providing unique information, typically in the form of something the user has (e.g. a mobile phone), something the user knows (e.g. a password) or something the user is (e.g. a biometric sample such as a fingerprint or facial image). There are generally at least two steps in the authentication process: 1) registration and 2) verification.

As part of registration, a user might be required to provide proof of identity and enroll his or her unique device, knowledge or biometric identifiers, which will later be used to verify the user's identity during future authentication attempts. As part of verification the user is prompted to present the identifying information of the type previously enrolled during registration - such as password, biometric sample, or confirmation from a trusted device. A computing system, such as a server authentication server receives the presented identifying information and compares it to the identifiers stored at the time of registration. If the identifying information matches the stored one, the system authenticates the user and grants access to the requested resource or service. If there is no match, authentication fails, and access is denied.

It is desirable to verify a person's identity for various device-implemented transactions. There are many applications for which quick and accurate verification of identity of a person is desirable. Some examples include airline travel and secure access to controlled areas. Additionally, remote identity authentication for applications such as mobile online shopping or mobile banking is now a common practice. Remote identity verification often involves authentication information being exchanged between a user's mobile device (generally a mobile phone) and a server performing verification.

Biometric processes have been demonstrated to improve the security and convenience of identity verification mechanisms as compared to approaches that rely on the use of passwords. Biometrics refers to measured physical characteristics unique to a person that can be used to verify the identity of the person. The biometric identifiers are measurable characteristics of a human user, such as a fingerprint, facial features, a voice print, a face print, an iris scan, a sample handwriting, a handprint, a capillary map, or DNA, etc...

Biometric identification and/or verification, for example using fingerprints and/or facial features is a method based on the very low probability that two people have the same fingerprints and/or facial features.

Generally, the recording of biometric samples can be carried out using the mobile device itself, such as a smartphone. Modern mobile devices are typically equipped with built-in cameras and sensors capable of capturing various biometric identifiers or references, such as facial features, fingerprints, or iris patterns. The registration process is based on self-enrollment of biometric identifiers, and the smartphone is equipped with a subsystem configured to perform comparison between the live biometric capture and the biometric identifiers registered during the registration step.

The Operating System (OS) of the mobile device plays a crucial role in managing and securing biometric data. It can utilize biometric matching algorithms to authenticate and confirm the identity of an individual, specifically the registered holder of the device. Smartphone operating systems provide dedicated frameworks and secure environments for processing biometric information.

However, this self-enrollment raises certain security concerns, particularly because it does not guarantee that the biometric identifiers actually belong to the right person and, in the case of certain transactions, this level of security may be not sufficient.

Different solutions have been developed in the prior art to increase the level of security of the authentication process. For example, to secure the authentication of the user, it is known from document WO 2020/260483 A1 to provision biometric tokens. Although the solution proposed in this document provides a very high level of security, there remains a need for digital onboarding enrollment which can be easily implemented in various transactions without requiring necessarily a token-enabled device. An object of the present invention is to alleviate at least some of the problems associated with prior art solutions.

### DISCLOSURE.

According to one aspect of the present invention, there is provided a method for verifying the identity of a user for the purpose of a secure transaction, comprising the following steps:
- Capturing, via a user device, biometric identifier from the user,
- Transmitting the biometric identifier to an Identity Authority Server communicatively coupled to the user device,
- Comparing, via the Identity Authority Server, the biometric identifier to an existing reference of the Identity Authority Server confirmed by governmental authority,
- Generating and sending to the user device, via the Identity Authority Server, a "successful match" or "mismatch" authentication result response including a verifiable credential as a proof of approval by the server of the biometric identifier in case of successful match.
- In case of "successful match", registering and storing, via the user device, the said biometric identifier, as a biometric reference approved by the Identity Authority Server, with the said verifiable credential of the authentication result response.

In contrast to the prior art use cases in which the biometric capture isn't turned into a verified biometric reference after identity of the user has been confirmed but is often discarded in a short term, the invention enables to provides a very convenient and easy to use way to confirm the identity of a user on a government-verified biometric identifier. The method according to the invention enables user identity verification in relation to its biometrics data without sharing biometrics and other personal identification information (PII) to untrusted entities.

Another advantageous feature of a preferred embodiment of the present invention is that biometric identifier is transmitted along with personal identity data extracted from an official identity credential, the personal identity data comprising for example at least one of: a name, date of birth, document number, nationality, or an image of the credential.

Another advantageous feature of a preferred embodiment of the present invention is that the authentication result response comprises a Boolean assertion indicating the successful match or mismatch result and the verifiable credential includes at least the Boolean result.

Another advantageous feature of a preferred embodiment of the present invention is that the verifiable credential is provided in a standardized format, such as a Digital Travel Credential (DTC), ISO-compliant photo identification, or mobile Driver's License (mDL).

Another advantageous feature of a preferred embodiment of the present invention is that the verifiable credential includes a public key that can be used to mathematically verify a digital signature created using the corresponding private key.

Another advantageous feature of a preferred embodiment of the present invention is that the method further comprises steps of generating via the device a pair of private and public keys, sending to the server the public key with the biometric identifier, wherein the authentication result "successful match" response includes an attestation of approval of the public key by the Server as the verifiable credential.

Another advantageous feature of a preferred embodiment of the present invention is that the step of generating a pair of keys is performed by a biometric subsystem of the user device.

Another advantageous feature of a preferred embodiment of the present invention is that the device being RBR-compliant, the method comprises steps of generating via the server a private and public key pair and a RBR based on the biometric identifier and the private key, wherein the authentication result "successful match" response includes the RBR with an attestation including the public key as the verifiable credential.

According to a second aspect of the present invention there is provided a method for executing a secure transaction between a user device and a relying party, comprising sending from the relying party a request for an identity authentication to the user device, capturing, via the user device, live biometric identifier and comparing the live biometric identifier to the biometric reference registered in the user device according to the method of the invention, In case of successful match, sending to the relying party the said verifiable credential.

Another advantageous feature of a preferred embodiment of the present invention is that the verifiable credential includes a public key of a key pair and an attestation of approval of the public key and the method comprises a step of digitally signing data of the transaction via the user device with a corresponding private key of the key pair.

Another advantageous feature of a preferred embodiment of the present invention is that the key pair is generated by the server or by the user device.

According to a third aspect of the present invention there is provided a system for verifying a user identity for the purpose of a secure transaction, comprising a user device configured to capture authentication biometric identifier from the user, an identity authority server communicatively coupled to the user device; the server configured to:
(i) Receive the biometric identifier
(ii) Compare the biometric identifier to a predefined existing reference approved by governmental authority
(iii) Generate and send one of a "successful match" or "mismatch" authentication result response including a verifiable credential as a proof of approval by the server of the biometric identifier in case of successful match In case of "successful match", the device is configured to register and store the said biometric identifier, as a biometric reference approved by the Identity Authority Server, with the said verifiable credential of the authentication result response.

Another advantageous feature of a preferred embodiment of the present invention is that the user device comprises a biometric subsystem configured to generate a private and public keys pair and to sign data with the private key.

Another advantageous feature of a preferred embodiment of the present invention is that the user device comprises a biometric subsystem configured to recover a private key from a biometrics token or RBR and to sign data with the recovered private key.

According to a fourth aspect of the present invention, there is provided a non-transitory computer-readable medium storing instructions that, when executed by a processor, cause the processor to capture biometric authentication data, Transmit the biometric authentication data to the Identity Authority Server, Receive the "successful match" or "mismatch" authentication result response including a verifiable credential as a proof of approval by the server of the biometric identifier in case of successful match and in case of "successful match", register and store the said biometric identifier, as a biometric reference approved by the Identity Authority Server, with the said verifiable credential of the authentication result response.

### BRIEF DESCRIPTION OF THE DRAWINGS.

Reference will now be made, by way of example, to the accompanying drawings, in which:
FIG.1 is a schematic illustration showing a system for verifying a user identity within a secure transaction according to one embodiment of the invention.
FIG.2 is a flow diagram showing a digital onboarding process of a method for verifying a user identity within a secure transaction.
FIG.3 is a schematic illustration showing an example of step for authentication of a user identity within a secure transaction implemented according to the method for executing a secure transaction according to the invention.
FIG.4 is a flow diagram showing a transaction phase of a method for executing a secure transaction according to the invention.
FIG.5 is a schematic illustration showing a system for verifying a user identity according to another embodiment of the invention.
FIG.6 is a schematic illustration showing a system for verifying a user identity according to another embodiment of the invention.

### DETAILED DESCRIPTION

The following description is made for the purpose of illustrating the general principles of the present invention and is not meant to limit the inventive concepts claimed herein. Further, particular features described herein can be used in combination with other described features in each of the various possible combinations and permutations.

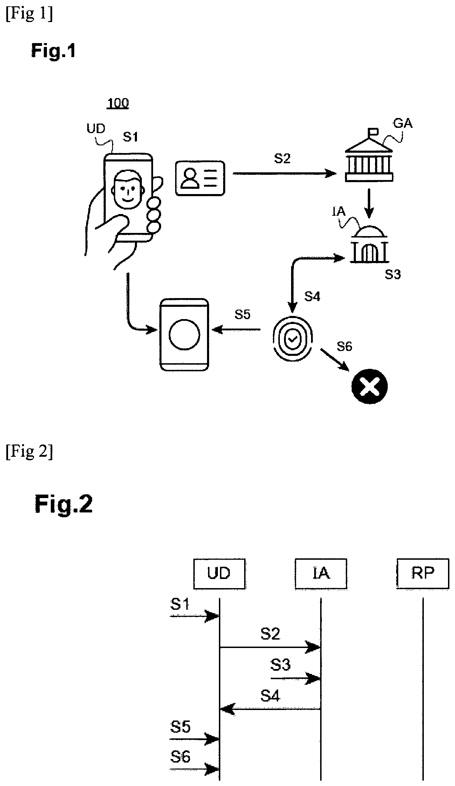

**FIG. 1** is an illustration of a system and process for verifying a user identity according to the invention for the purpose of securing a transaction.

The system of **FIG.1** is referenced as 100. The system 100 comprises a user device UD. The user device UD is configured to capture biometric identifier from the user and may comprise typically a biometric subsystem equipped with a sensor module. The user device UD is preferentially a mobile device such as for example a smartphone, a tablet computer or any mobile device with a sensor for obtaining biometric data.

The biometric sensor module may include preferentially fingerprint scanner or facial recognition camera but may include also iris scanner, voice recognition microphone, or other biometric input components integrated into the user device.

Generally, upon receiving a user input, the biometric sensor module is configured to capture biometric identifier from the user, convert the biometric capture into a biometric bitstream and transmit the biometric bitstream data to a processor of the user device UD for analysis and verification.

More generally, the user device UD may further include software instructions stored in memory associated with the processor of the user device UD that enables biometric enrollment, authentication, and secure transmission of biometric data to a remote server or local application.

The mobile device UD may also include encryption mechanisms and secure storage to protect biometric information from unauthorized access. The captured biometric identifier may be utilized for access control, identity verification, secure payments, or personalized user experiences.

In addition, as illustrated in FIG.1, system 100 comprises an identity authority server IA communicatively coupled to the user device UD.

Generally, as is well known, an Identity Authority Server IA refers to a system operated or authorized by a trusted governmental authority GA for the purpose of managing identity-related data, including biometric references. This may include authorization of access to a database of identity information, comprising detailed citizen records, biometric templates (such as fingerprints, facial recognition data, and iris scans), associated identity documents, access logs, and metadata about issuing authorities. The database is designed to ensure high levels of data integrity, confidentiality, and traceability, supporting secure identification, authentication, and auditing processes across authorized public and private sector systems.

**FIG. 2** is a flow diagram illustrating a process to verify the user's identity using the method of the invention. Preferentially, the functionality or steps described herein may be implemented by a dedicated application in the device UD (herein referred to as an App) stored on a non-transitory computer-readable medium. For example, the App may be downloaded to and stored in memory on the device UD associated with its processor. Thus, the App typically represents a set of software instructions encoded on the non-transitory medium that embody at least a part of the described steps performed by the device UD.

At step S1, biometric identifier (e.g., a fingerprint image or facial image) of a user is captured by the device UD. If the device UD is a smartphone, the dedicated application App may present instructions on how to perform biometric capture using the smartphone. For example, the App may display instructions to use the smartphone camera to capture a facial image of the user (or other sensors to capture a fingerprint image) and then extract the biometric data. The device UD may use processing to convert the biometric capture into a biometric bitstream.

At step S2, the device UD transmits the biometric bitstream to the server IA. Preferentially, the biometric bitstream is transmitted with personal identity data extracted from an official identity credential like for example a passport, a mobile driver license or also an identity card.

Personal identity comprises, for example, at least one of the following but not limited to: a name, date of birth, document number, nationality, or an image or scan of the credential.

In a preferred embodiment, the method may comprise a step of identifying the appropriate server IA to contact. In the case of the method implemented in the device on an application App, the App may provide the user with a predefined list of appropriate servers to contact in relation to the country of origin, the place of residence, etc. Preferentially, in another embodiment, the official identity credential may include a NDEF tag that enables direct contact with the appropriate Server IA.

At step S3, the server IA receives the biometric identifier, compares the biometric identifier to an existing reference of the server IA confirmed by the government authority GA. For example, the reference may be stored in a database of identity information of the server IA. Then, the server IA generates one of a "successful match" or "mismatch" authentication result response based on the result of the comparison.

Preferentially, to perform this match or mismatch comparison step, the server IA may proceed to a one-to-one verification or one-to-many identification. The One-to-One (1:1) verification involves comparing the presented biometric identifier or an identity credential document against a single stored template to confirm the identity of the claimed user. For example, the server IA performs a one-to-one match to verify that the biometric identifier captures as well as personal identity data extracted from an official identity credential sent by the user matches the enrolled template associated with his user, for example as registered in a database of the server IA.

The One-to-Many (1:N) identification involves comparing a presented biometric sample against multiple stored templates to identify the user without a claimed identity. For example, the server IA might perform a One-to-Many search through a database of enrolled individuals to identify a person based only on their biometric data, and for example without any other personal identity data of the user.

At S4, the server IA sends the authentication result response to the device UD, including a verifiable credential as proof of approval by the server IA of the biometric identifier in case of successful match.

At S5, in case of successful match, the method comprises a step of registering in the user device UD the said biometric identifier captured as a biometric reference approved by the Identity Authority Server IA, with the verifiable credential of the authentication result response.

This may include saving the biometric identifier captured to the memory associated with the processor of the device UD. According to the invention, by approved by the Identity Authority Server IA, it must be understood that the biometric reference includes verifiable proof of approval by government authority.

Otherwise, if there is no match, in S6, the user authentication fails, and digital onboarding is denied.

Preferentially, the non-transitory computer-readable medium, or otherwise herein above named also as application or App, stores the instructions that, when executed by the processor of the device UD, cause the processor to capture biometric authentication data, transmit the biometric identifier to the Identity Authority Server IA, receive the authentication result response from the Identity Authority Server IA, and in case of match result, register and store the biometric identifier as a biometric data reference along with a said verifiable credential proof of approval by governmental authority.

A more detailed description of the authentication result response and the verifiable credential defined in relation to steps S4 et S5 is provided below. More specifically, various levels of security concerning the reliability of the verifiable credential may be implemented according to the invention.

At a basic level of security, the authentication result response may rely on minimal verification, for example on a Boolean assertion indicating the successful match or mismatch result. In this case, the verifiable credential of the authentication result response may include the Boolean assertion result, with preferentially an attestation originating from the trusted government source (like for example a digital signature of the trusted source).

Advantageously, to improve further the level of security, the verifiable credential may include, further to the Boolean assertion, a metadata indicating at least one of, but not limited to, an issuance time, a credential type credential status, or an expiration date.

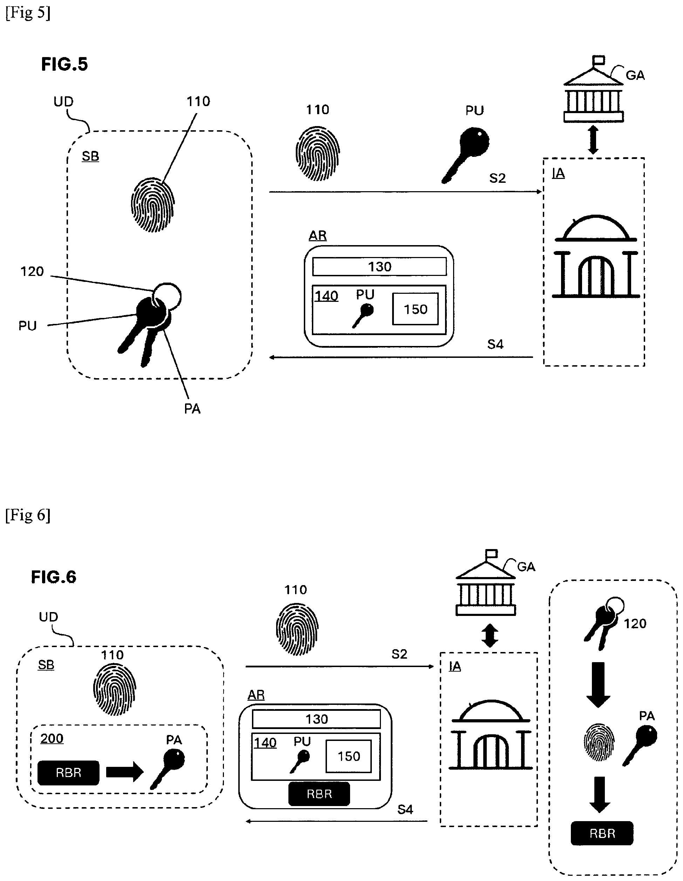

At an intermediate level of security, as illustrated in FIG.5, the verifiable credential may include a public key PU of a key pair 120 that can be used further to mathematically verify a digital signature created using the corresponding private key PA.

Preferentially, in the preferred embodiment of the invention illustrated in FIG.5, the authentication result response AR may include the verifiable credential 140, an attestation 150 (like for example a digital signature of the server IA) and generic presentation data of the response (metadata) 130.

As illustrated in FIG.5, the method comprises steps of generating via the device UD the pair 120 of private PA and public PU keys, sending at step S2 to the server IA the public key PU with the biometric identifier 110. In this case, the authentication result "successful match" response may include the public key PU itself as the verifiable credential 140 and optionally along with an attestation of approval 150 of the public key PU by the server IA.

At a higher level of security, verification steps may be introduced relying on a biometrics sub-system SB of the device UD. Accordingly, preferentially, as illustrated in FIG.5, the step of generating the pair 120 of keys is performed directly by the biometric subsystem SB of the user device UD. When a locally stored private key - generated securely within the sub-system - is associated with the biometric identifier 110, security is then enhanced. This enables the creation of a cryptographic link between the biometric identifier 110 issued from the sub-system and the device UD hosting the sub-system.

As is well known, the biometrics sub-system of a smartphone for example may typically include components such as fingerprint sensors or facial recognition modules.

At the highest level of security, as illustrated in FIG.6, the response AR may be validated through comprehensive security protocols, for instance through implementation of Biometrics token otherwise named as Renewable Biometric Reference (hereinafter designed by RBR).

Some details of generating "biometrics token" are now developed in relation with the present description. In this example, an authentication key pair 110 is generated by a verification device that may be preferentially the server IA. The authentication pair 120 may include a public key PU and a private key PA. The private key PA of the key pair 120 and the biometric bitstream 110 from the user device UD are run through an algorithm to generate a biometrics token named RBR. Any algorithm can be used to generate an encoding from which the original bitstream of the biometric data can be recovered.

As illustrated in FIG.6, the method comprises step of generating via the server IA a private PA and public PU key pair 120.

In this case, preferentially, the server IA is configurated to generate a RBR based on the biometric identifier 110 and the private key PA of the pair 120. In this preferred embodiment, the device UD may be RBR-compliant and for example may comprise a module 200 configured to process RBR. Accordingly, the device UD, and more particularly the module 200, may be configured to process biometrics token for example by recovering the private key PA from the RBR sent by the server IA.

The authentication result "successful match" response may include the public key PU itself as the verifiable credential 140, optionally along with an attestation of approval 150 of the public key PU by the server IA, and also the RBR. From the RBR, the user device UD may recover the private key PA and may be able to digitally and cryptographically sign data in further steps, and preferentially for example within a transaction with a relying party.

In this way, the server IA may generate a successful match authentication response AR including the RBR (biometrics token), the public key PU as the verifiable credential 140 including in addition preferentially an attestation 150 of approval of the public key PU.

Then, the device UD registers the RBR and the RBR may be preferentially processed by the biometric sub-system SB of the device UD to recover the private key PA.

In another embodiment, preferentially, the generation by the server IA of the cryptographic key pair may be associated with an Extended Access Control (EAC) cryptographic security protocol. For example, the biometric reference comprises an indication that the biometric data involved are government-approved biometric in accordance with ISO/IEC 23220-4. The standard ISO/IEC 23220-4 relates to digital identification frameworks, often including requirements for cryptographic proof of government -issued identity.

In another embodiment, the verifiable credential may be provided in a standardized format, such as a Digital Travel Credential (DTC), ISO-compliant photo identification, or mobile Driver's License (mDL).

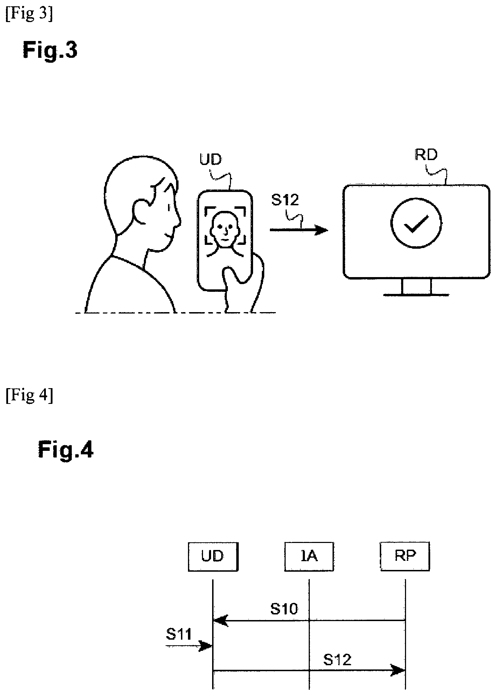

The main steps of the method for executing a secure transaction will now be described in reference to **FIG.3 and FIG.4****.**

The secure transaction takes place between the device UD and a relying party RP as illustrated schematically in FIG. 3. The relying party RP may include a bank, a travel agency, or any other or any other service provider that requires verification of identity's user to complete a transaction.

The method comprises a first step S10 of sending from the relying party RP to the device UD a user's identity confirmation request.

At S11, the device UD captures live biometric identifier and proceeds to the comparison of the live biometric identifier to the previously enrolled approved biometric reference registered in the device UD according to the method of verification described above.

At S12, if the match is successful, the device UD sends to the relying party RP the result of the comparison and the verifiable credential (as described herein above). Otherwise, if there is mismatch, the user verification fails, and digital onboarding is denied by the Replying Party (RP).

In a preferred embodiment, as already described above, the verifiable credential comprising a public key PU of a key pair 120 and optionally an attestation of approval 150, issued from the server IA, of the public key PU, the method may comprise preferentially a step of digitally signing data of the transaction via the user device UD with a corresponding private key PA of the key pair 120.

The description of the various embodiments of the present invention have been presented for purposes of illustration but are not intended to be exhaustive or limited to the embodiments disclosed. Many modifications and variations will be apparent to those of ordinary skill in the art without departing from the scope and spirit of the embodiments described. The terminology used herein was chosen to best explain the principles of the embodiments, the practical application or technical improvement over technologies found in the marketplace, or to enable others of ordinary skill in the art to understand the embodiments disclosed herein.

## Claims

1. A method for verifying a user identity for the purpose of a secure transaction, comprising the following steps:
- Capturing (S1), via a user device (UD), biometric identifier (110) from the user,
- Transmitting (S2) the biometric identifier (110) to an Identity Authority Server (IA) communicatively coupled to the user device (UD),
- Comparing (S3), via the Identity Authority Server (IA), the biometric identifier to an existing reference of the Identity Authority Server confirmed by governmental authority (GA),
- Generating (S4) and sending to the user device (UD), via the Identity Authority Server (IA), a "successful match" or "mismatch" authentication result response (AR) including a verifiable credential (140) as a proof of approval by the server (IA) of the biometric identifier (110) in case of successful match.
- In case of "successful match", registering and storing (S5), via the user device (UD), the said biometric identifier, as a biometric reference approved by the Identity Authority Server (IA), with the said verifiable credential (140) of the authentication result response (AR).

2. Method according to the preceding claim, wherein that biometric identifier (110) is transmitted along with personal identity data extracted from an official identity credential, the personal identity data comprising for example at least one of: a name, date of birth, document number, nationality, or an image of the credential.

3. Method according to anyone of the preceding claims, wherein the authentication result response comprises a Boolean assertion indicating the successful match or mismatch result and the verifiable credential includes at least the Boolean result.

4. Method according to anyone of the preceding claims, wherein the verifiable credential is provided in a standardized format, such as a Digital Travel Credential (DTC), ISO-compliant photo identification, or mobile Driver's License (mDL).

5. Method according to anyone of the preceding claims, wherein the verifiable credential (140) includes a public key (PU) that can be used to mathematically verify a digital signature created using the corresponding private key (PA).

6. Method according to anyone of the preceding claims, comprising steps of generating via the device (UD) a pair (120) of private (PA) and public (PU) keys, sending to the server (IA) the public key (PU) with the biometric identifier (110), wherein the authentication result "successful match" response (AR) includes an attestation of approval (150) of the public key (PU) by the server (IA) as the verifiable credential (140).

7. Method according to the preceding claim 6, wherein the step of generating a pair of keys (120) is performed by a biometric subsystem (SB) of the user device (UD).

8. Method according to anyone of the preceding claims, the device (UD) being RBR-compliant, the method comprising steps of generating via the server (IA) a private (PA) and public (PU) key pair (120) and a RBR based on the biometric identifier (110) and the private key (PA), wherein the authentication result "successful match" response includes the RBR with at least the public key (PU) as the verifiable credential (140).

9. A method for executing a secure transaction between a user device (UD) and a relying party (RP), comprising
- Sending (S10) from the relying party (RP) a request for an identity authentication to the user device (UD)
- Capturing (S11), via the user device (UD), live biometric identifier and comparing (S11) the live biometric identifier to the biometric reference registered in the user device (UD) according to the method of claims 1 to 8,
- In case of successful match, sending (S12) to the relying party (RP) the said verifiable credential (140).

10. Method according to preceding claim, wherein the verifiable credential (140) includes a public key (PU) of a key pair (120) and an attestation (150) of approval of the public key (PU) and the method comprises a step of digitally signing data of the transaction via the user device (UD) with a corresponding private key (PA) of the key pair (120).

11. Method according to preceding claim, wherein the key pair (120) is generated by the server (IA) or by the user device (UD).

12. System (100) for verifying a user identity for the purpose of a secure transaction, comprising
- a user device (UD) configured to capture authentication biometric identifier from the user,
- an identity authority server (IA) communicatively coupled to the user device (UD); the server (IA) configured to:
(iv) Receive the biometric identifier (110)
(v) Compare the biometric identifier (110) to a predefined identity reference data stored in a database approved by governmental authority (GA)
(vi) Generate and send one of a "successful match" or "mismatch" authentication result response (AR) including a verifiable credential (140) as a proof of approval by the server (IA) of the biometric identifier (110) in case of successful match
- in case of "successful match", the device (UD) is configured to register and store the said biometric identifier (110) as a biometric reference approved by the Identity Authority Server (IA), with the said verifiable credential (140) of the authentication result response (AR).

13. System (100) according to preceding claim, wherein the user device (UD) comprises a biometric subsystem (SB) configured to generate a private (PA) and public (PU) keys pair and to sign data with the private key (PA).

14. System (100) according to the preceding claim, wherein the user device (UD) comprises a biometric subsystem (SB) configured to recover a private key (PA) from a biometrics token or RBR and to sign data with the recovered private key (PA).

15. A non-transitory computer-readable medium storing instructions that, when executed by a processor, cause the processor to
- Capture biometric identifier (110)
- Transmit the biometric identifier (110) to the Identity Authority Server (IA)
- Receive the "successful match" or "mismatch" authentication result response including a verifiable credential (140) as a proof of approval by the server (IA) of the biometric identifier in case of successful match
in case of "successful match", register and store the said biometric identifier (110), as a biometric reference approved by the Identity Authority Server (IA), with the said verifiable credential (140) of the authentication result response (AR).
